Europäisches Patentamt

European Patent Office

Office européen des brevets

(11) Publication number: **0 056 878**

**B1**

# (12) EUROPEAN PATENT SPECIFICATION

(45) Date of publication of patent specification: **28.11.84**

(51) Int. Cl.³: **B 29 D 3/00, B 32 B 17/04**

(21) Application number: **81200090.9**

(22) Date of filing: **23.01.81**

(54) **Method for laminating foam bodies including a reinforcing scrim.**

(43) Date of publication of application:
**04.08.82 Bulletin 82/31**

(45) Publication of the grant of the patent:
**28.11.84 Bulletin 84/48**

(84) Designated Contracting States:
**BE DE FR GB IT NL SE**

(56) References cited:
**DE-B-1 016 680**
**FR-A-1 376 302**
**GB-A-1 227 910**
**US-A-3 507 735**
**US-A-3 791 911**
**US-A-4 049 852**
**US-A-4 050 607**

(73) Proprietor: **THE DOW CHEMICAL COMPANY Dow Center 2030 Abbott Road Post Office Box 1967**
**Midland Michigan 48640 (US)**

(72) Inventor: **Hay II, Robert Allen**
**1686 Hubert Road**
**Midland, Michigan (US)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

## Description

The present invention relates to a generally continuous method for the preparation of an elongate laminate from a plurality of foam bodies formed from a synthetic resinous thermoplastic material having a reinforcing scrim embedded between said foam bodies, including the steps of heating adjacent surfaces of adjacent foam bodies to a temperature sufficient to plasticize the foam body surfaces by passing the foam bodies and the interposed reinforcing scrim along the major surfaces of a planar heating element, contacting the adjacent heated and plasticized surfaces of the foam bodies, and cooling the plasticized surfaces to form a rigid bond between the foam bodies incorporating the reinforcing scrim therein.

Frequently, it is desired to laminate bodies of synthetic resinous thermoplastic foam together by passing a heated blade therebetween to heat-plastify adjacent surfaces of the bodies. The adjacent surfaces are then pressed together to fuse the surfaces together to provide a laminated body of the desired size. For many processes, it is desirable to incorporate within such a laminate a reinforcing scrim such as a glass fiber reinforcing scrim. Such laminates may be employed for the insulation of cryogenic vessels by the so-called spiral generation technique. Such a technique is disclosed in US patent specifications US—A—4,017,346 and US—A—4,050,607. An apparatus for preparing laminates suitable for the spiral generation process is set forth in US patent specification US—A—4,049,852 while various configurations of laminates suitable for the spiral generation process are set forth in US patent specifications US—A—3,919,034; US—A—3,924,039; and US—A—3,954,539. Often such laminates, after preparation, show a somewhat curved configuration along the longitudinal axis. The reason for the development of such undesired curvature was not understood and when it occurred it was frequently in an undesired direction which necessitated extra mechanical manipulation of the laminate, also referred to in the art as a billet or log, in order to have it conform to the desired configuration. In the thermal insulation for cryogenic vessels, undesired mechanically induced tensile stresses in the insulation should be avoided in order to minimize the possibility of the insulating laminate cracking under thermal stress.

The present invention resides in an improved method for the preparation of thermoplastic foam laminates wherein an undesirable bowing or curvature of the laminate is avoided.

The present invention therefore provides a method of the kind specified in the first paragraph of page 1, which is characterized by passing the reinforcing scrim relative to the major surfaces of the planar heating element during the heating of the adjacent foam surfaces in such a way that the frictional drag on the foam bodies on both heat transmitting sides of the planar heating element is balanced to thereby obtain a laminate exhibiting a desired degree of curvature.

The method of the present invention and some preferred embodiments will become more apparent from the following specification taken in connection with the drawing wherein:

Fig. 1 is a schematic side view of a lamination apparatus in accordance with the invention,

Fig. 2 is a top view of the lamination apparatus of Fig. 1;

Fig. 3 is a partly-disassembled heating blade assembly as used in the apparatus of the invention;

Fig. 4 is a sectional view of the heating blade of the assembly of Fig. 3 showing the passage of a reinforcing scrim therethrough; and

Figure 5 is a sectional view of an embodiment of the present invention in which a pair of heating blades are employed.

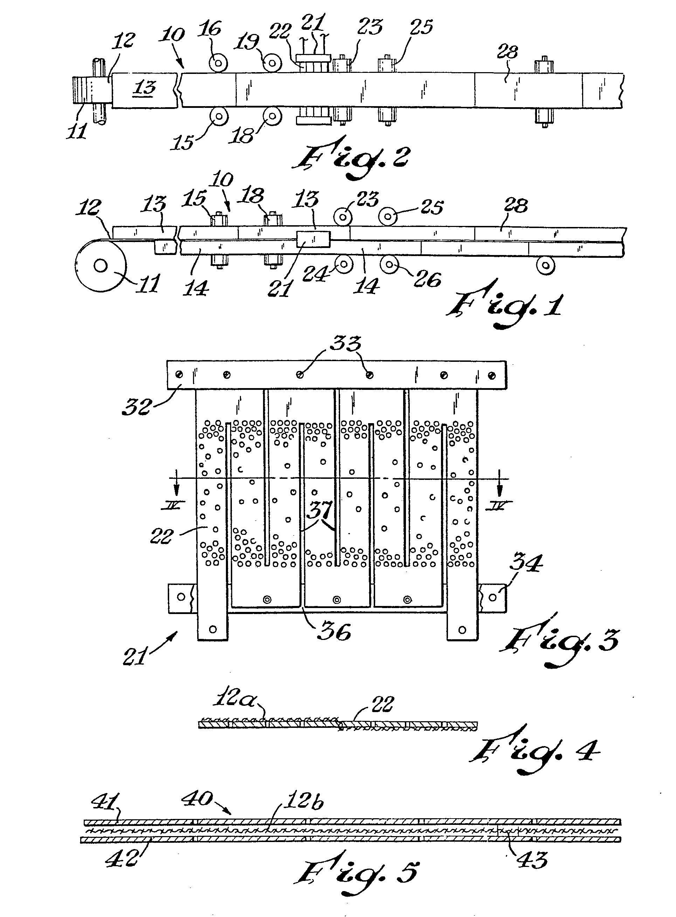

In Figures 1 and 2 there is schematically depicted a laminating apparatus 10 comprising in cooperative combination a frame and support means (not shown). Supported on the frame is a supply roll 11 for dispensing therefrom a reinforcing scrim 12. The reinforcing scrim 12 extends between a first series of foam bodies formed from a synthetic resinous material 13 arranged in end-to-end relationship and a second series of foam bodies 14 also formed from a synthetic resinous material. The foam bodies 13 and 14 have adjacent surfaces with the scrim 12 disposed therebetween. A first pair of feed rolls 15 and 16 convey the foam bodies 13, 14 and the scrim 12 toward a second pair of pressure or feed rolls 18 and 19. Adjacent the feed rolls 18 and 19 and remote from the feed rolls 15 and 16 is a heating blade or platen assembly 21. It is preferred to support the scrim 12 between roll 11 and blade assembly 21 with a smooth sheet metal plate (not shown) to prevent wrinkling or folding of the scrim. The blade assembly 21 includes a heating element or blade 22 which passes between the foam bodies 13 and 14 and raises the temperature of the adjacent surfaces of the foam bodies 13 and 14 to a temperature sufficient to heat-plastify and collapse the foam material. The foam bodies 13 and 14 are removed from the region of the blade assembly 21 by first and second pairs of draw rolls 23, 24 and 25, 26. The draw rolls force the heated surfaces of the foam bodies together, to thereby encapsulate the scrim within the heat plastified collapsed foam and between the foam bodies. It will be understood that the heat plasticized material of the foam bodies will readily pass or flow through the mesh or open spaces provided between the strands of the scrim to meld into each other to thereby unite into a combined layer of the plasticized material with the scrim embedded in the meld. Upon cooling, the plasticized material with the reinforcing scrim substantially centrally disposed therein is rigidified to permanently fuse the foam bodies to each other.

In Figure 3 there is depicted a view of a heating blade assembly 21 having an electrical resistance heating element 22 of generally flat planar configuration. The heating element 22 is perforated in regions where the maximum generation of heat is desired and may be of a substantially square or rectangular configuration. The thickness of the heating element is not critical provided that the thickness is sufficient to provide adequate strength during use and provided that the voltage applied to the plate will produce a current flow sufficient to heat the plate to a temperature sufficient to plasticize or melt the adjacent surfaces of the foam bodies. In a preferred embodiment, the heating element is shaped in a serpentine configuration, somewhat as illustrated in Figure 3. Such serpentine heating elements are well known in the art. The heating element 22 is supported within a first frame or support member 32 and is suitably insulated therefrom. The heating element is affixed to the support member 32 by means of screws 33 which are also electrically insulated from the heating element 22. Remotely disposed from the first support member 32 is a second support member 34, of which the bottom half only is shown. The heating element 22 is electrically insulated from the support member 34 by means of insulating material 36 such as a glass cloth-siloxane resin laminate.

A sectional view through the heating element 22 is depicted in Figure 4 wherein a reinforcing scrim 12a is shown passing through a central transversely disposed slot 37 of the element 22. By passing the reinforcing scrim 12a through the centrally disposed slot of the heating element, the frictional drag on adjacent surfaces of the foam bodies being laminated is approximately equalized such that the tendency for the resultant laminate to warp is substantially reduced.

In Figure 5 there is depicted a sectional view of an alternate heating assembly 40 suitable for the practice of the present invention. The heating assembly 40 comprises a first electrical resistance heating element 41 and a like heating element 42 in spaced apart parallel face-to-face relationship with element 41. Preferably, the heating elements have a serpentine configuration such as is illustrated for the heating element of Figure 3. Configurations for the heating element other than the preferred serpentine shape may be used and will be readily apparent to persons skilled in the art. Thus, a single reversely bent or U-shaped element could be satisfactorily employed in the practice of the invention. Heating elements 41 and 42 are separated by a plurality of spacers 43 of like discoidal configuration. The spacers 43 are disposed at the terminal ends or reverse bends in the heating elements and correspond in location generally to the support members 32 and 34 of Figure 3. Thus, the heating elements of Figure 5 are, in essence, two heating elements such as are depicted in Figures 3 and 4 but are positioned in a spaced-apart relationship from each other to provide a path for a reinforcing scrim 12b to be passed therebetween. Preferably, the heating elements for use in the practice of the invention have major opposed parallel faces and have a thickness not greater than 6.35 mm (one-quarter inch) and preferably about 4.76 mm (3/16 of an inch).

The heating element 22 of Figure 3 is preferably prepared from a perforated stainless steel sheet having a thickness of about 3.18 mm (1/8 inch) and the heating element 40 of Figure 5 is prepared from perforated stainless steel sheets each having a thickness of about 1.59 mm (1/16 of an inch) and spaced about 1.59 mm (1/16 of an inch) apart to permit the passage therebetween of the reinforcing scrim 12b. For the lamination of polystyrene foam having a density of about 16.019 kg/m$^3$ (two (2) pounds per cubic foot), the heating elements are heated to a temperature, as indicated by a thermocouple manually positioned on the surface of the heating element to a temperature of about 315.6°C (600°F). A convenient source of electrical power for the heating element is an alternating current or direct current welding power supply.

The method of the present invention is useful with any synthetic resinous thermoplastic foam material which is heat-weldable and provides laminates having a minimum warp or curvature. The reinforcing scrim may be wider, narrower or equal in width to the faces of the foam bodies being laminated depending on the desired end use. The scrim may be continuous as depicted in Figures 1 and 2 or consist of a plurality of overlapping joined lengths. Conveniently, short lengths are joined at each end of a scrim section by a transversely extending pressure sensitive adhesive tape or other desired securing means. In the preparation of elongate laminates for use in the application of thermal insulation by the so-called spiral generation process, it is highly desirable to maintain the curvature of the laminate at a value which is equal to or less than the curvature of the vessel wall to which it is applied.

The present invention is particularly suited for the preparation of laminated foam bodies of a synthetic resinous thermoplastic material for use in the insulation of cryogenic vessels. A typical laminate might comprise 5 pieces or planks of foam; for example, one 50.8 by 203.2 mm (2 by 8 inch) plank laminated to four 50.8 by 152.4 mm (2 by 6 inch) planks wherein the 50.8 by 152.4 mm (2 by 6 inch) planks are stacked four high, and one of the edges of each 50.8 by 152.4 mm (2 by 6 inch) plank is heat sealed to one face of the 50.8 by 203.2 mm (2 by 8 inch) plank to provide an 203.2 by 203.2 mm (8 inch by 8 inch) square laminate having a reinforcing scrim encapsulated in the sealed inner face of the 50.8 by 203.2 mm (2 by 8 inch) plank. A simpler laminate might comprise two 101.6 by 203.2 mm (4 by 8 inch) planks in welded face-to-face engagement with a reinforcing scrim therebetween. In the preparation of laminates, a substantial problem has been observed in that when two planks are laminated together by the use of a hot blade, and a scrim is supplied and embedded within the weld between the two planks, an undesirable curvature or warpage is obtained in the resulting laminate. The present invention substantially reduces or eliminates such undesired curvature or warpage.

In its broadest application, it has been discovered that by passing the scrim through a planar heating assembly, the curvature or warpage of the laminate is substantially and significantly reduced. The mechanism by which this reduction in curvature is obtained is believed to be basically due to the balancing of frictional forces against each other ·on the opposed faces of the foam bodies to be joined.

By passing the scrim through an electrically heated blade or between a pair of such blades, the frictional drag on the foam bodies being laminated is equalized. The bond between the foam bodies is obtained by heating the adjacent faces of foam bodies to plastify, i.e., to soften or melt the material and then contacting such heated foam faces under pressure. Heating of the scrim itself has little or no effect on the degree of bonding between the foam bodies. When a foam body is pushed or pulled through a heating assembly and the foam bodies to be laminated move relative to the heated blade or blades, friction is developed between the faces of the foam bodies contacting the fixed blade or blades. When a single blade is used, for example, in such a lamination procedure, one has the choice of placing a reinforcing scrim to be encapsulated in the weld line on one side or the other of the heated blade. Accordingly, on one side of the blade, the foam body is in direct contact with the heating blade and on the other side of the blade, the reinforcing scrim is in direct contact with the blade and, accordingly, the frictional forces are different on opposite sides of the heating blade.

Rectangular foam bodies to be laminated, as in the apparatus of Figures 1 and 2, are bonded, that is, heat sealed or welded across the entire contiguous surfaces of the foam bodies. As the adjacent faces of the foam bodies are heated to a temperature at which they will bond to each other, the scrim is encapsulated or embedded therein. A portion of the scrim would only be free to move in the event that a foam surface to be laminated has voids therein such as grooves, cut-outs and the like.

### Claims

1. A generally continuous method for the preparation of an elongate laminate from a plurality of foam bodies (13, 14) formed from a synthetic resinous thermoplastic material having a reinforcing scrim (12, 12a, 12b) embedded between said foam bodies, including the steps of heating adjacent surfaces of adjacent foam bodies to a temperature sufficient to plasticize the foam body surfaces by passing the foam bodies and the interposed reinforcing scrim along the major surfaces of a planar heating element (21, 40) contacting the adjacent heated and plasticized surfaces of the foam bodies, and cooling the plasticized surfaces to form a rigid bond between the foam bodies incorporating the reinforcing scrim therein, characterized by passing the reinforcing scrim (12; 12a; 12b) relative to the major surfaces of the planar heating element (21, 40) during the heating of the adjacent foam surfaces in such a way that the frictional drag on the foam bodies (13, 14) on both heat transmitting sides of the planar heating element is balanced to thereby obtain a laminate exhibiting a desired degree of curvature.

2. The method of claim 1, wherein the heating element (21) is a generally flat sheet (22) having a substantially serpentine configuration.

3. The method of claim 2, wherein the scrim (12b) is passed substantially centrally through the heating element (40).

4. The method of claim 3, wherein the scrim (12a) is passed from a first side to a second side of the heating element (21).

5. The method of claim 1, wherein the heating element (40) comprises a pair of spaced-apart planar blade members (41, 42) and the scrim (12b) is passed therebetween.

6. The method of claim 1, wherein the planar heating element (21) comprises a planar blade member (22) provided with a slot (37) and wherein said scrim (12a) is passed through the slot whereby a first portion of the scrim is in frictional contact with one surface of the blade member and a second portion of the scrim is in frictional contact with an opposite surface of the blade member.

7. The method of claim 6, wherein the slot (37) is positioned substantially centrally of the planar blade member (21).

### Patentansprüche

1. Im allgemeinen kontinuierliches Verfahren für die Herstellung eines länglichen Laminats aus einer Vielzahl von Schaumstoffkörpern (13, 14), die aus einem synthetischen harzartigen thermoplastischen Material gebildet wurden, die eine Verstärkungseinlage (12, 12a, 12b) enthalten, eingebettet zwischen den Schaumstoffkörpern, bestehend aus den Schritten, daß man benachbarte Oberflächen benachbarter Schaumstoffkörper auf eine Temperatur erhitzt, die ausreicht, um die Schaumstoffkörperoberflächen zu plastifizieren durch Durchführen der Schaumstoffkörper und der dazwischengelagerten Verstärkungseinlagen entlang der größeren Oberflächen eines planaren Heizelements (21, 40), daß man die benachbarten erhitzten und plastifizierten Oberflächen der Schaumstoffkörper in Kontakt bringt und die plastifizierten Oberflächen kühlt, um eine starre Verbindung zwischen den Schaumstoffkörpern zu bilden, die die Verstärkungseinlagen darin einschließt, dadurch gekennzeichnet, daß man die Verstärkungseinlagen (12a; 12b) bezüglich der Hauptoberflächen des planaren Heizelements (21, 40) während des Erhitzens der benachbarten Schaumstoffoberflächen in solcher Weise erhitzt, daß der durch Reibung hervorgerufene Widerstand auf die Schaumstoffkörper (13, 14) auf beiden Hitze übertragenden Seiten des planaren Heizelements so abgeglichen wird, daß ein Laminat erhalten wird, das einen gewünschten Grad an Biegung aufweist.

2. Verfahren nach Anspruch 1, dadurch gekennzeichnet, daß das Heizelement (21) eine im allgemeinen flache Folie (22) ist, die eine im wesentlichen serpentinenartige Gestaltung hat.

3. Verfahren nach Anspruch 2, dadurch gekennzeichnet, daß die Einlage (12b) im wesentlichen zentral durch das Heizelement (40) geführt wird.

4. Verfahren nach Anspruch 3, dadurch gekennzeichnet, daß die Einlage (12a) von einer ersten Seite zu einer zweiten Seite des Heizelements (21) geführt wird.

5. Verfahren nach Anspruch 1, dadurch gekennzeichnet, daß das Heizelement (40) ein Paar voneinander entfernter planarer Blatteile (41, 42) umfaßt, und daß die Einlage (12b) dazwischen durchgeführt wird.

6. Verfahren nach Anspruch 1, dadurch gekennzeichnet, daß das planare Heizelement (21) einen planaren Blatteil (22) umfaßt, der mit einem Einschnitt (37) versehen ist und wobei die Einlage (12a) durch den Einschnitt geführt wird, wobei ein erster Anteil der Einlage sich im Reibungskontakt mit einer Oberfläche des Blatteils befindet und ein zweiter Anteil der Einlage sich im Reibungskontakt mit einer entgegengesetzten Oberfläche des Blatteils befindet.

7. Verfahren nach Anspruch 6, dadurch gekennzeichnet, daß der Einschnitt (37) im wesentlichen zentral zu dem planaren Blatteil (21) angebracht ist.

**Revendications**

1. Méthode généralement continue pour la préparation d'un produit laminé allongé à partir d'un certain nombre d'articles en mousse (13, 14) qui sont formés en une matière thermoplastique résineuse synthétique avec un élément de renforcement (12, 12a, 12b) noyé entre lesdits articles en mousse, comprenant les étapes consistant à chauffer des surfaces adjacentes d'articles adjacents en mousse à une température suffisante pour plastifier les surfaces des articles en mousse par passage des articles en mousse et de l'élément interposé de renforcement le long des surfaces majeures d'un élément chauffant plan (21, 40), à mettre les surfaces adjacentes chauffées et plastifiées des articles en mousse en contact et à refroidir les surfaces plastifiées pour former une liaison rigide entre les articles en mousse où est incorporé l'élément de renforcement, caractérisée en ce que l'on fait passer l'élément de renforcement (12; 12a; 12b) par rapport aux surfaces majeures de l'élément chauffant plan (21, 40) pendant le chauffage des surfaces adjacentes de mousse de façon que la traînée par frottement sur les articles en mousse (13, 14) sur les deux côtés transmettant la chaleur de l'élément chauffant plan soit équilibrée pour ainsi obtenir un produit laminé présentant un degré souhaité de courbure.

2. Méthode selon la revendication 1, où l'élément chauffant (21) est une feuille généralement plate (22) ayant une configuration sensiblement en serpentin.

3. Méthode selon la revendication 2 où l'élément de renforcement (12b) passe sensiblement au centre de l'élément chauffant (40).

4. Méthode selon la revendication 3, où l'élément de renforcement (12a) passe d'un premier côté à un second côté de l'élément chauffant (21).

5. Méthode selon la revendication 1, où l'élément chauffant (40) comprend deux organes formant lames planes et espacées (41, 42) et l'élément de renforcement (12b) passe entre eux.

6. Méthode selon la revendication 1, où l'élément chauffant plan (21) comprend un organe formant lame plane (22) pourvu d'une fente (37) et où l'élément de renforcement (12a) passe à travers la fente, ainsi une première partie de l'élément de renforcement est en contact de frottement avec une surface de l'organe formant lame et une seconde partie de l'élément de renforcement est en contact de frottement avec une surface opposée de l'élément formant lame.

7. Méthode selon la revendication 6, où la fente (37) est placée sensiblement au centre de l'élément formant lame plane (21).

Fig. 2

Fig. 1

Fig. 3

Fig. 4

Fig. 5